# EUROPEAN PATENT APPLICATION

(11) **EP 1 138 439 A2**
(43) Date of publication of application: **04.10.2001**
(21) Application number: 01303080.4
(22) Date of filing: 30.03.2001
(51) Int. Cl.: B24B 57/02

(54) **Method and apparatus for recycling abrasive grain slurry**

(30) Priority: 31.03.2000 JP 2000098464; 18.10.2000 JP 2000318142
(71) Applicant: E & E Co., Ltd., Nagoya-shi, Aichi-ken (JP)
(72) Inventor: Horio, Motoichi, c/o E & E Co. Ltd., Nagoya shi, Aichi-ken (JP)
(74) Representative: Beresford, Keith Denis Lewis

(57) **Abstract**

A method of recycling a wire saw abrasive grain slurry, the method comprises the steps of:
directing an abrasive grain waste liquid to a first separator (1) for separation into recycled abrasive grain and a fine abrasive grain mixed liquid;
directing the recycled abrasive grain from said first separator to a recovered abrasive grain tank (25);
directing the fine abrasive grain mixed liquid from said first separator to a separated liquid tank (27);
directing the fine abrasive grain mixed liquid to a second separator (10) and subjecting it to separation into waste abrasive grain and recovered cutting liquid;
directing the recovered cutting liquid from said second separator (10) to a recovered cutting liquid tank (34) and directing the recovered cutting liquid from the recovered cutting liquid tank (34) to the recovered abrasive grain tank;
adding fresh abrasive grain and cutting liquid for dilution to the recovered cutting liquid in the recovered cutting liquid tank (34) and to the recycled abrasive grain to create a recycled abrasive grain mixed cutting liquid; and
feeding the recycled abrasive grain mixed cutting liquid to an abrasive grain supply tank (43);
characterised by adding fresh cutting liquid to the fine abrasive grain mixed liquid in the separated liquid tank prior to directing the resulting liquid to said second separator (10).

## Description

The present invention relates to a method of recycling wire saw abrasive grain slurry and apparatus therefor which may comprise improved centrifugal separators.

Conventionally, a wire saw makes use of an abrasive grain slurry, in which abrasive grain as a cutting material is mixed with a cutting liquid to form a slurry. Recently, there has been an increased tendency to recycle the slurry after use, which requires that the abrasive grain and the cutting liquid are recovered, separated and reused. Such recycling makes more effective use of resources, thereby reducing the cost of a cutting operation, and also has benefits for the environment because a smaller volume of slurry is dumped to waste and there is a lower requirement for fresh abrasive grain and fresh cutting liquid.

Japanese Patent Laid-Open No. 172237/1999 discloses a method and apparatus for recycling wire saw abrasive grain slurry in which a used abrasive grain slurry is separated into a coarse particle-containing liquid and a fine particle-containing liquid at a first centrifuge.

The first particle-containing liquid is further separated into a recovered abrasive grain-containing liquid and a fine particle-containing liquid at a second centrifuge. The respective fine particle-containing liquids separated at the first and second centrifuges are then separated into fine particles and a recovered grinding fluid using an electric discharge apparatus as a high-density electric field-generating apparatus. The recovered abrasive grain-containing liquid separated at the second centrifuge and the recovered grinding fluid are led to a slurry supply apparatus to be recycled as an abrasive grain slurry.

Japanese Patent Laid-Open No. 33913/1999 discloses a circulating device for wire saw abrasive grain which is provided with a first separator that takes in used grain slurry from a wire saw and separates it into recovered grains and fine grain mixed fluid including chips and broken grains. The fine grain mixed fluid separated from the first separator is fed to a second separator which separates it into solid waste and recovered cutting fluid. A slurry mixing device which receives the recovered grains separated by the first separator and the recovered cutting fluid separated by the second separator is provided with an abrasive grain supplying device which supplies new grains and a cutting fluid supplying device which supplies new cutting fluid. The (partly) recirculated grain slurry is then passed to a slurry supplying device for re-use.

One of the drawbacks of the arrangements described above is that the fine grain mixed fluid from the first separator is supplied directly to the second separator. As a result, there are problems in separation and recovery of abrasive grain and cutting fluid are not effected smoothly due to the viscosity of the fine grain mixed liquid. This causes inefficient separation in the second separating means, and heavy loading is liable to be applied to the screw of the second separating means. Also, abrasion and damage are liable to occur on the screw. Another drawback is that the feed amounts of abrasive grain and cutting liquid cannot be minutely adjusted.

No specific provisions are made for ameliorating abrasion, damage or the like on the blade edge of the screw in the separating means. Nor do these prior art documents give any indication that special provisions are made for controlling rotation of the screw to deal with disposition of load.

Because no provision is made for precise adjustment of the respective feed rates of abrasive grain waste liquid, fine grain mixed liquid, fresh cutting liquid or fresh abrasive grain and cutting liquid for dilution, it is difficult to regulate the prior art recycling systems efficiently.

It is therefore an object of the present invention to provide a method of recycling wire saw abrasive grain slurry that overcomes or at least lessens some of the problems outlined above. It is also an object of the present invention to provide apparatus for use in the method.

In a first aspect, the invention is a method of recycling a wire saw abrasive grain slurry, the method comprising the steps of:
directing an abrasive grain waste liquid to a first separator for separation into recycled abrasive grain and a fine abrasive grain mixed liquid;
directing the recycled abrasive grain from said first separator to a recovered abrasive grain tank;
directing the fine abrasive grain mixed liquid from said first separator to a separated liquid tank;
adding fresh cutting liquid to the fine abrasive grain mixed liquid in the separated liquid tank and directing the resulting liquid to a second separator and subjecting it to separation into waste abrasive grain and recovered cutting liquid;
directing the recovered cutting liquid from said second separator to a recovered cutting liquid tank and directing the recovered cutting liquid from the recovered cutting liquid tank to the recovered abrasive grain tank;
adding fresh abrasive grain and cutting liquid for dilution to the recovered cutting liquid in the recovered cutting liquid tank and to the recycled abrasive grain to create a recycled abrasive grain mixed cutting liquid; and
feeding the recycled abrasive grain mixed cutting liquid to an abrasive grain supply tank.

Advantageously, the various feed streams may be subject to computer control to ensure that optimised mixes of components are obtained. Also, computer control of the various feed streams enables arithmetic processing to be carried out so that the cost of an operation can be monitored as it proceeds, for example when using increased proportions of recycled abrasive grain and/or recycled cutting liquid.

In a first embodiment of the invention, used abrasive grain waste liquid is directed to an undiluted solution tank from a wire saw. The abrasive grain waste liquid in the undiluted solution tank is directed to a first centrifugal separator by way of a first pipe and is separated therein into recycled abrasive grain and a fine abrasive grain mixed liquid for processing. The amount (feed rate) of the abrasive grain waste liquid directed to the first centrifugal separator may be input into a host computer, for example by way of a network. The amount of abrasive grain waste liquid may then be subjected to arithmetic processing in the computer to enable the cost of the operation to be monitored. In addition, the first centrifugal separator may be adapted for reduction in wear of the blade edge of the screw by providing a cemented carbide chip on the blade edge of the screw, and for achievement of sure feed and serviceability in sure and smooth separation processing. Also, when load is applied on the screw, a servomotor provided with a control unit (feedback, controller, sensor or the like) is used to control the rotating speed of the screw, thus preventing failure of the first centrifugal separator and the screw. If wear and/or failure are caused on the screw of the first centrifugal separator, this may be input into the computer with the aid of the network, as desired. The degree of wear may be examined compared with set parameters, and the computer may perform arithmetic processing to determine efficiency, endurance time and so on to provide judgement of best and efficient states or the like. This judgement control enables the overall cost of the operation to be monitored. Also, repairing of the first centrifugal separator, replacement of parts therefor and the like may be subjected to arithmetic processing in the computer to enable on-going costs to be monitored.

The separated and processed recycled abrasive grain is directed to a recovered abrasive grain tank through a second pipe. Also, the fine abrasive grain mixed liquid is directed to a separated liquid tank through a third pipe. The separated liquid tank reduces an amount of the recycled abrasive grain being fed to the recovered abrasive grain tank, thereby decreasing mixing, described later, of chips into the recovered abrasive grain tank for ensuring quality of a recovered abrasive grain mixed liquid.

The fine abrasive grain mixed liquid in the separated liquid tank is directed to a second centrifugal separator by means of a fourth pipe, in the course of which fresh cutting liquid is supplied to the fine abrasive grain mixed liquid by way of a fifth pipe to dilute the same. The purpose of such dilution is to lessen the viscosity of the fine abrasive grain mixed liquid to regulate the amount of fine abrasive grain mixed liquid fed to the second centrifugal separator and to achieve efficient separation into recycled abrasive grain and recovered cutting liquid in the second centrifugal separator. Also, load on the screw of the second centrifugal separator is reduced and abrasion, damage and the like on the screw are avoided. Further, the purpose of such dilution is to replenish the amount of recycled abrasive grain fed to the recovered abrasive grain tank. The amount of fine abrasive grain mixed liquid (feed rate of fine abrasive grain mixed liquid) and an amount of fresh cutting liquid (feed rate of fresh cutting liquid) may be input into the computer by way of the network. The amounts (feed rates) may be subjected to arithmetic processing in the computer to enable the cost of the operation to be monitored.

The fine abrasive grain mixed liquid thus diluted is subjected to separation processing into waste abrasive grain and recovered cutting liquid in the second centrifugal separator, and the recovered cutting liquid is directed to a recovered cutting liquid tank through a seventh pipe. The recovered cutting liquid in the recovered cutting liquid tank is directed to a recovered abrasive grain tank by way of an eighth pipe, to be mixed with the recycled abrasive grain in the recovered abrasive grain tank, and fresh abrasive grain for dilution and cutting liquid, respectively, are added by way of ninth and tenth pipes to create a recycled abrasive grain mixed cutting liquid (recycled abrasive grain cutting liquid). The amounts (feed rates) of fresh abrasive grain and fresh cutting liquid may be input into the computer by way of the network. The amounts (feed rates) of the fresh abrasive grain and the fresh cutting liquid may be subjected to arithmetic processing in the computer for quality control. Alternatively, the amounts (feed rates) of the fresh abrasive grain and the fresh cutting liquid may be subjected to arithmetic processing in the computer to enable on-going costs to be monitored.

The recycled abrasive grain mixed cutting liquid is supplied to an abrasive grain supply tank by way of an eleventh pipe, and is supplied to the wire saw by way of a twelfth pipe from the abrasive grain supply tank. Also, the amount of recycled abrasive grain mixed cutting liquid together with a set amount of recycled abrasive grain mixed cutting liquid may be subjected to arithmetic processing in the computer for quality control. Alternatively, the amount (feed rate) of the recycled abrasive grain mixed cutting liquid may be subjected to arithmetic processing in the computer to enable the cost of an operation to be determined.

In a second aspect, the invention is an apparatus for recycling wire saw abrasive grain slurry, said apparatus comprising:
means for directing an abrasive grain waste liquid to a first separator for separation into recycled abrasive grain and a fine abrasive grain mixed liquid;
means for directing the recycled abrasive grain from said first separator to a recovered abrasive grain tank;
means for directing the fine abrasive grain mixed liquid from said first separator to a separated liquid tank;
means for directing the fine abrasive grain mixed liquid from said separated liquid tank to a second separator for separation into waste abrasive grain and recovered cutting liquid;
means for directing the recovered cutting liquid from said second separator to a recovered cutting liquid tank;
means for directing the recovered cutting liquid from the recovered cutting liquid tank to the recovered abrasive grain tank;
means for adding fresh abrasive grain and cutting liquid for dilution to the recovered cutting liquid in the recovered cutting liquid tank and to the recycled abrasive grain, respectively, to create a recycled abrasive grain mixed cutting liquid; and
means for feeding the recycled abrasive grain mixed cutting liquid to an abrasive grain supply tank;
characterised by means for adding fresh cutting liquid to the fine abrasive grain mixed liquid in the separated liquid tank prior to directing the resulting liquid to said second separator.

The apparatus may include control means for monitoring and controlling the various feed streams and for monitoring and controlling the performance of the separators. Preferably, the separators are centrifugal separators. Preferably, each centrifugal separator comprises:
a casing provided with a solid matter discharge port and a separated liquid discharge port;
a screw provided in the casing;
a cutting liquid supply pipe provided in the screw;
a supply port provided in the screw for communication with the cutting liquid supply pipe; and
a cemented carbide chip provided on a blade edge of the screw.

Preferably, said cemented carbide chip extends along an entire blade edge of the screw.

Each centrifugal separator may also comprise a servomotor for controlling the rotating speed of the screw when load is applied on the screw. The servomotor may be controlled by a control unit.

The invention will now be particularly described by way of example only with reference to the drawings, in which:
Figure 1 is a schematic diagram of a first part of a recycling system in accordance with the present invention;
Figure 2 is a schematic diagram of a second part of a recycling system in accordance with the present invention;
Figure 3 is an enlarged schematic view showing a centrifugal separator useful in the present invention, and
Figure 4 is a flow chart illustrating an outline of a managing system according to the invention.

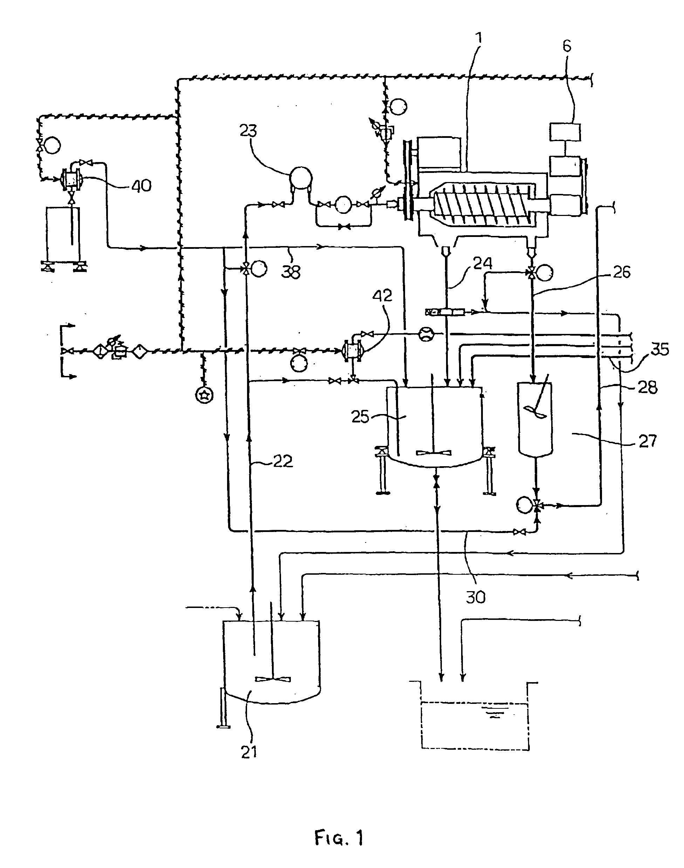

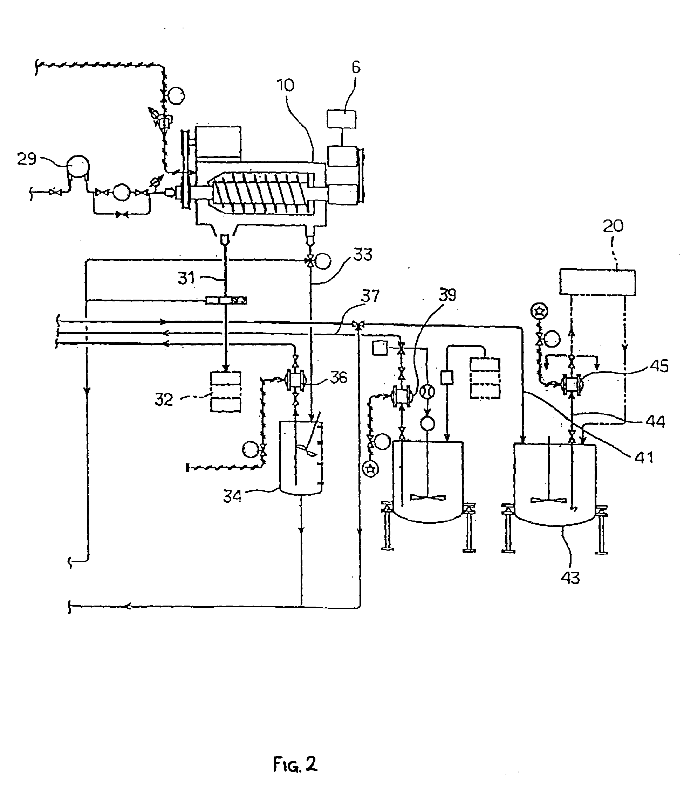

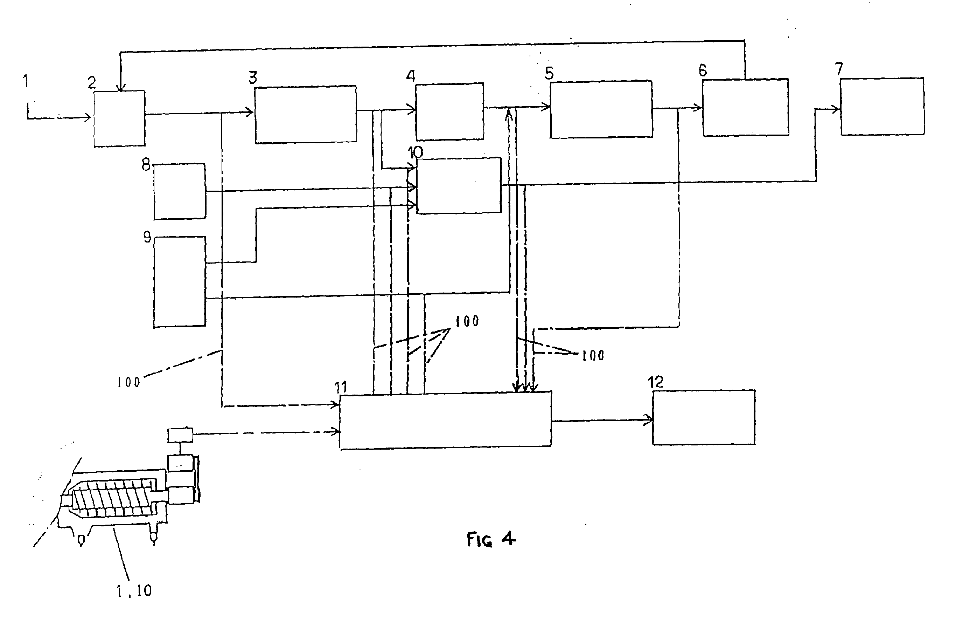

Referring firstly to Figures 1 and 2, used abrasive grain waste liquid is directed to an undiluted solution tank 21 through a pipe (not shown) from a wire saw 20. A pump 23 causes the abrasive grain waste liquid in the undiluted solution tank 21 to be directed through a first pipe 22 to the first centrifugal separator 1 to be separated into recycled abrasive grain and a fine abrasive grain mixed liquid for processing. The recycled abrasive grain is directed to a recovered abrasive grain tank 25 through a second pipe 24 from a solid matter discharge port 2a. Also, the fine abrasive grain mixed liquid is directed to a separated liquid tank 27 through a third pipe 26 from a separated liquid discharge port 2b. The amount of abrasive grain waste liquid may be input to a computer 101 (Figure 4) *via* communication lines such as a network 100 or the like.

The fine abrasive grain mixed liquid in the separated liquid tank 27 is directed to the second centrifugal separator 10 by means of a fourth pipe 28 and a second pump 29, in the course of which a fresh cutting liquid is supplied to the fine abrasive grain mixed liquid by way of a fifth pipe 30 to dilute the same. The purpose of such dilution is to lower the viscosity of the fine abrasive grain mixed liquid to achieve efficient separation into recycled abrasive grain and recovered cutting liquid in the second centrifugal separator 10. Also, load on the screw of the second centrifugal separator 10 is reduced thereby and abrasion, damage and the like on the screw are avoided. The amounts of fresh cutting liquid and/or fine abrasive grain mixed liquid may be input to the computer 101 *via* communication lines such as the network 100 or the like.

The fine abrasive grain mixed liquid thus diluted is separated into waste abrasive grain and recovered cutting liquid in the second centrifugal separator 10 for processing, the waste abrasive grain being directed to a waste liquid abrasive grain tank 32 through a sixth pipe 31 from the solid matter discharge port 2a. Also, the recovered cutting liquid is directed to a recovered cutting liquid tank 34 through a seventh pipe 33 from the liquid matter discharge port 2b. The amount of fine abrasive grain mixed liquid may be input into the computer 101 *via* communication lines such as the network 100 or the like.

The recovered cutting liquid in the recovered cutting liquid tank 34 is directed to the recovered abrasive grain tank 25 by way of an eighth pipe 34 and a pump 36 to be mixed with recycled abrasive grain in the recovered abrasive grain tank 25, and fresh abrasive grain and fresh cutting liquid, respectively, for dilution are added by way of ninth and tenth pipes 37,38 and pumps 39,40 to create a recycled abrasive grain mixed cutting liquid. The amounts of fresh cutting liquid and/or fine abrasive grain mixed liquid and/or recycled abrasive grain mixed cutting liquid may be input to the computer 101 *via* communication lines such as the network 100 or the like.

The recycled abrasive grain mixed cutting liquid is supplied to an abrasive grain supply tank 43 by way of an eleventh pipe 41 and a pump 42, and is supplied to the wire saw 20 by way of a twelfth pipe 44 and a pump 45 from the abrasive grain supply tank 43. The amount of recycled abrasive grain mixed cutting liquid may be input into the computer 101 *via* communication lines such as the network 100 or the like.

In addition, the respective tanks may be provided with agitating vanes, liquid level sensors or the like, as required. The respective pipes may be provided with flow meters, bypass pipes, valves of various functions or the like, as required.

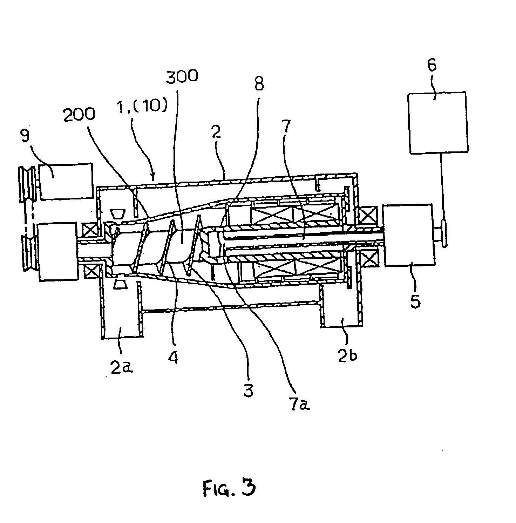

The first and second centrifugal separators 1,10 used in the above embodiment of a system for recycling wire saw abrasive grain slurry are of the same basic construction. Therefore, an explanation will be given of the first centrifugal separator 1 with reference to Figure 3, but it will be understood that corresponding features are present in the second centrifugal separator 10.

The centrifugal separator 1 comprises a casing 2 provided with a solid matter discharge port 2a and a separated liquid discharge port 2b, a bamboo-shaped screw 3 provided in an inner cylinder 200 of the casing 2, a cemented carbide chip 4 provided on a blade edge of the screw 3, a servomotor 5 for driving the screw 3, a control unit 6 for controlling the servomotor 5, and a supply pipe 7 for abrasive grain waste liquid or fine abrasive grain mixed liquid present on the screw 3. An opening 7a of the supply pipe 7 communicates with an opening 8 provided on the screw 3 and a gap with a body 300 of the screw 3. Also, the supply pipe 7 is driven by a motor 9.

The first and second centrifugal separators may be subject to computer control and monitoring. For example, the degree of abrasion of the cemented carbide chip 4 provided on the blade edge of the screw 3 may be input into the computer 101 via communication lines such as the network 100 or the like.

Referring now to Figure 4, reference numeral 1 denotes a feed stream of abrasive grain waste liquid, which is directed to a waste liquid tank 2. Abrasive grain waste liquid from tank 2 is directed to first centrifugal separator 3 and the feed rate is input to computer 11 *via* network 100. Recovered abrasive grain is directed from the first separator 3 to a recovered abrasive grain tank 10 and its feed rate is input to computer 11 *via* network 100. Also, fine abrasive grain mixed liquid is directed from the first separator 3 to a separated liquid tank 4. Again, the feed rate is input to computer 11 via network 100.

The fine abrasive grain mixed liquid in the separated liquid tank 4 is directed to the second separator 5 and fresh cutting liquid is supplied from fresh cutting liquid tank 9 to the second separator 5. The feed rates to the second separator 5 are input to the computer 11 *via* network 100. Recovered cutting fluid from the second separator 5 is directed to a recovered cutting fluid tank 6 and its feed rate is input to computer 11 *via* network 100. The recovered cutting fluid in tank 6 is recycled to waste liquid tank 2 for dilution purposes.

Fresh abrasive grain is fed from tank 8 to the recovered abrasive grain tank 10, which also receives fresh cutting fluid from tank 9. The respective feed rates of fresh abrasive grain and fresh cutting fluid to tank 10 are input to computer 11 *via* network 100. The mixture of recycled abrasive grain, fresh abrasive grain and fresh cutting liquid in tank 10 is directed to abrasive grain supply tank 12 and the feed rate of the mixture is input to computer 11 *via* network 100.

The output 12 of computer 11 may be quality control information relating to degradative wear on the screw of the first and/or second separator, or may be financial information obtained from the arithmetic processing of the various feed streams to provide a determination of the running costs of operation.

Although the invention has been particularly described above with reference to specific examples, it will be understood by persons skilled in the art that variations and modifications are possible without departing from the scope of the claims which follow.

## Claims

1. A method of recycling a wire saw abrasive grain slurry, the method comprising the steps of:
directing an abrasive grain waste liquid to a first separator for separation into recycled abrasive grain and a fine abrasive grain mixed liquid;
directing the recycled abrasive grain from said first separator to a recovered abrasive grain tank;
directing the fine abrasive grain mixed liquid from said first separator to a separated liquid tank;
directing the fine abrasive grain mixed liquid to a second separator and subjecting it to separation into waste abrasive grain and recovered cutting liquid;
directing the recovered cutting liquid from said second separator to a recovered cutting liquid tank and directing the recovered cutting liquid from the recovered cutting liquid tank to the recovered abrasive grain tank;
adding fresh abrasive grain and cutting liquid for dilution to the recovered cutting liquid in the recovered cutting liquid tank and to the recycled abrasive grain to create a recycled abrasive grain mixed cutting liquid; and
feeding the recycled abrasive grain mixed cutting liquid to an abrasive grain supply tank;
**characterised by** adding fresh cutting liquid to the fine abrasive grain mixed liquid in the separated liquid tank prior to directing the resulting liquid to said second separator.

2. A method as claimed in claim 1 wherein the various feed streams are subject to computer control.

3. An apparatus for recycling wire saw abrasive grain slurry, said apparatus comprising:
means for directing an abrasive grain waste liquid to a first separator for separation into recycled abrasive grain and a fine abrasive grain mixed liquid;
means for directing the recycled abrasive grain from said first separator to a recovered abrasive grain tank;
means for directing the fine abrasive grain mixed liquid from said first separator to a separated liquid tank;
means for directing the fine abrasive grain mixed liquid from said separated liquid tank to a second separator for separation into waste abrasive grain and recovered cutting liquid;
means for directing the recovered cutting liquid from said second separator to a recovered cutting liquid tank;
means for directing the recovered cutting liquid from the recovered cutting liquid tank to the recovered abrasive grain tank;
means for adding fresh abrasive grain and cutting liquid for dilution to the recovered cutting liquid in the recovered cutting liquid tank and to the recycled abrasive grain, respectively, to create a recycled abrasive grain mixed cutting liquid; and
means for feeding the recycled abrasive grain mixed cutting liquid to an abrasive grain supply tank;
**characterised by** means for adding fresh cutting liquid to the fine abrasive grain mixed liquid in the separated liquid tank prior to directing the resulting liquid to said second separator.

4. Apparatus as claimed in claim 3 including control means for monitoring and controlling the various feed streams and/or for monitoring and controlling the performance of the separators.

5. Apparatus as claimed in claim 3 or claim 4 wherein the separators are centrifugal separators.

6. Apparatus as claimed in claim 5 wherein each centrifugal separator comprises:
a casing provided with a solid matter discharge port and a separated liquid discharge port;
a screw provided in the casing;
a cutting liquid supply pipe provided in the screw;
a supply port provided in the screw for communication with the cutting liquid supply pipe; and
a cemented carbide chip provided on a blade edge of the screw.

7. Apparatus as claimed in claim 6 wherein said cemented carbide chip extends along an entire blade edge of the screw.

8. Apparatus as claimed in any one of claims 5 to 7 wherein at least one centrifugal separator also comprises a servomotor for controlling the rotating speed of the screw when load is applied.

9. Apparatus as claimed in claim 8 wherein the servomotor is controlled by a control unit.

10. A control system for a wire saw abrasive grain slurry recycling apparatus as claimed in any one of claims 3 to 9, the control system comprising computer means and a network for receiving information regarding feed rates of various flows to components of the apparatus and for conveying instructions to control said feed rates; **characterised in that** said control system monitors and controls at least the feed rates of a stream of fresh cutting liquid added to a fine abrasive grain mixed slurry obtained from a first separator and a stream of the resulting liquid directed to a second separator.
